Europäisches Patentamt

**European Patent Office**

Office européen des brevets

(19)

(11) Publication number: **0 105 482**
A1

(12) # EUROPEAN PATENT APPLICATION

(21) Application number: **83109770.4**

(22) Date of filing: **29.09.83**

(51) Int. Cl.³: **A 23 L 1/216**

(30) Priority: **06.10.82 US 433146**

(43) Date of publication of application:
**18.04.84 Bulletin 84/16**

(84) Designated Contracting States:
**AT BE CH DE FR GB IT LI LU NL SE**

(71) Applicant: **U and I INCORPORATED**
**8701 West Gage Boulevard**
**Kennewick Washington 99336(US)**

(72) Inventor: **Meade, Murray Edmund**
**304 Colubia Court**
**Boardman Oregon 97818(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Triangularly shaped, partially fried potato product and method of producing same.**

(57) A process for par-frying strips cut from raw potatoes in which the strips are cut in triangular form to increase processing efficiency and produce an enhanced finished fry. A triangular cross-sectional par-fry having crisper corners, better taste, higher percentage of solids, improved coloring and enhanced bite shear characteristics.

EP 0 105 482 A1

## Description

## TRIANGULARLY SHAPED, PARTIALLY FRIED POTATO PRODUCT AND METHOD OF PRODUCING SAME

### Technical Field

This invention relates to partially fried, frozen potato strips and a method for producing them, and more particularly, to such strips having a triangular cross-section for improved color, texture and flavor.

### Background Art

Traditionally, french fries were produced by cutting raw potatoes into strips and frying them in hot oil. Although this method can produce excellent french fries when fresh, high-quality potatoes are used, the quality of the french fry will vary seasonally and regionally as a result of the quality of the potatoes used. The desire of retailers to market french fries of consistent and uniform quality has led increasingly to the use of frozen, partially fried potato strips rather than raw potato strips at retail outlets.

These partially fried potato strips, known as "par-fries," are prepared by a number of different processes, such as those disclosed in U.S. Patents Nos. 3,397,993 and 4,254,153. These processes generally include peeling, trimming, and cutting raw potatoes into strips having a square or rectangular cross-section of a suitable size and blanching the strips in steam or hot water to partially cook the potatoes. The blanched strips are dried in heated air and partially fried in hot oil and are then frozen. The frozen par-fries are then sent to retailers, where they are prepared for consumption by immersing them in hot oil for a final frying, which usually takes between one and four minutes.

Many modifications of the basic process for preparing par-fries have been developed in an effort to improve the overall quality of the french fries which result after final frying of the par-fries. Although par-fry processes can produce fries of consistent quality, it has been difficult in the past to produce french fries having the level of quality desired. Existing par-fry processes require relatively long processing and par-frying times. Additionally, they do not always produce a fry having the desired appearance, taste and texture. Ideally, the consumer prefers a french fry having a crisp exterior surface and a mealy interior. That is, consumers generally desire a french fry having a crispy outer surface which requires a certain degree of bite shear to penetrate, yet expect a mealy interior portion to be found inside the crispy outer surface. "Bite shear" is defined as the amount of force necessary to bite through a french fry after it has been subjected to final frying. Consumers as well as processors consider bite shear to be a good indicator of whether the french fry has good textural characteristics.

Another major drawback to existing processes is that they require that the starting potato be of relatively high quality. The original par-fry processes developed limited the processors to using only the higher quality potatoes as they were available. A desirable processing potato is one with a high percentage of solids in its raw state. Retailers generally require par-fries with a solids percentage of around 32-36%. To achieve this result using existing par-fry processes, it is necessary to use raw potatoes having a solids percentage in the range of at least 19-21%. In each geographical area, there are relatively few potato varieties which consistently provide raw product meeting that requirement.

It can be seen, therefore, that there is a need for an improved par-fry potato product which will have improved flavor and textural characteristics, and additionally, can be produced from raw potatoes having a relatively wide range in percentage of raw solids.

The basic potato par-fry shape is an elongated strip rectangular or square in cross-section. This shape is easily cut from raw potatoes but has several disadvantages. Square (hereinafter also applying to rectangular) strips have a tendency to pile into solid stacks on a conveyor, blocking air circulation and thus reducing the efficiency of hot air heating or cold air freezing. The square shape also requires a long time to blanch (water or oil) because the center of the square cross-section is a considerable distance from the side surfaces and corners exposed to the heated blanching medium. One of the purposes of blanching is to partially cook the strip; another is to remove moisture from the strip. The further the distance the center is from the surface, the longer it is necessary to blanch at the desired temperatures without overcooking the surface. Furthermore, the taste of a final par-fried potato is often dependent upon the amount of oil absorbed into the potato strip. Rectangular fries have only a limited amount of oil absorption during oil blanching (par frying) because the surface area is small compared to the total volume of the strip. It is frequently difficult to obtain the desired flavor, crispness, and golden color in a rectangular strip that consumers find appealing when viewing and when biting into the final fried strip.

As a result, the conventional rectangular or square cross-section strip as cut from the natural fresh or stored potatoes has proven to have many deficiencies for processing, handling and final consumer acceptance.

Disclosure of Invention

It is an object of the invention to provide a par-fry cut from a raw potato which will have improved textural qualities, color, and flavor after final frying.

It is another object of this invention to provide a par-fry cut from a raw potato which will provide increased bite shear after final frying.

It is another object of this invention to provide a par-fry·cut from a raw potato having a novel exterior shape which will be visually pleasing to the customer.

**0105482**

It is another object of this invention to provide a par-fry cut from a raw potato which will heat more efficiently throughout the strip and more rapidly release moisture and absorb oil during production, and to provide a process for making such par-fries cut from raw potatoes.

It is another object of this invention to provide such a par-fry cut from a raw potato which can be produced from raw potatoes having a relatively low percentage of raw solids.

These and other objects which will become more apparent as the invention is more fully described below are obtained by providing a frozen, partially fried potato strip having a triangular cross-section cut from a natural raw potato. These triangular par-fries are produced by a method which includes the steps of blanching, drying, frying, and quick-freezing triangularly cut raw potato strips. During these steps, the strips absorb and give off heat, moisture, and oil more efficiently than par-fry strips of conventional shape. The resultant par-fries produce french fries after final frying which have improved texture, flavor, appearance and eating quality.

Brief Description of the Drawings

Fig. 1 is a block diagram illustrating the steps preferably used to prepare the triangularly shaped par-fries of this invention.

Fig. 2 is an isometric view of a par-fry potato strip having a triangular cross-section.

Fig. 3 is a cross-section of the par-fry of Fig. 2.

Fig. 4 is a cross-section of a conventional square par-fry.

Best Mode for Carrying Out the Invention

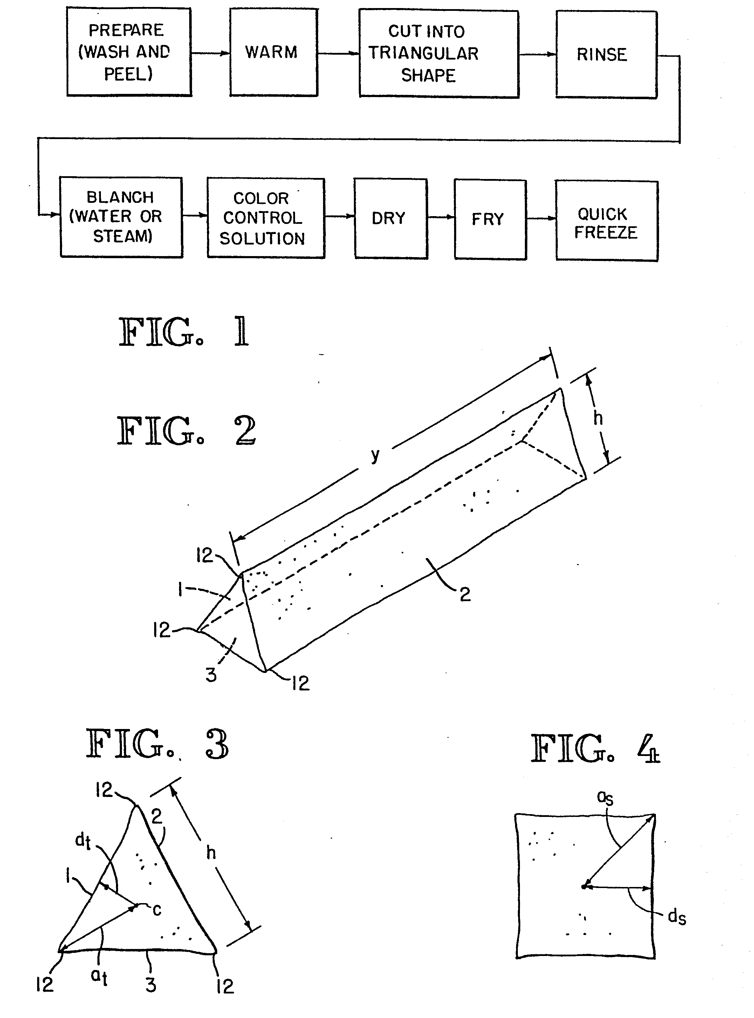

A triangularly shaped par-fry 10 embodying the principles of this invention is illustrated in Fig. 2. It is understood that the term "par-fry" as used herein means a potato strip cut from a fresh whole potato or a whole potato stored in a controlled atmosphere. These par-fries are cut from whole, raw, natural potatoes as compared, for example, to reconstituted potatoes which are extruded into a final shape.

The par-fry of this invention has a triangular cross-section having long, straight sides, as best seen in Fig. 3. Although the height of the sides 1,2,3 (dimension h) and degree of the angles formed at the corners may not be equal and may be varied if so desired without deviating from the spirit of the invention, sides 1,2,3 having equal heights of about 1/2 inch have been found to be well suited for final frying. The length of the par-fry (dimension y) is preferably determined by the size of the potato which is cut into raw strips, but the length could be shortened, if so desired, without departing from the spirit of the invention. The triangularly shaped par-fry illustrated in Fig. 2 has several important advantages over conventional square or rectangular par-fries. A triangular cross-section will have a greater surface area in proportion to its volume than conventional shapes. Thus, more area is exposed to the surrounding environment during heating and frying processes. Furthermore, its cross-sectional area will be smaller than a conventional square shape. As a result, more moisture can be removed during drying and more oil absorbed during frying for a desired temperature and time. The times and temperatures for blanching (oil or water) cut strips are limited in range if the desired surface crispness and mealy center are to be obtained.

As is apparent in Figures 3 and 4, for strips having the same width sides, the center c of the cross-section of a triangular strip is closer (dimension $d_t$) to the outer surfaces as compared to the distance between the center and the side (dimension $d_s$) of conventional square shapes. Similarly, the distance between the center c and a corner (dimension $a_t$) for a triangular strip is less than the distance between the center c and a corner (dimension $a_s$) for a square strip. This ensures that heat and moisture will transfer more efficiently and quickly from the center c of the triangular shaped par-fry than from conventionally shaped square or rectangular par-fries.

The process preferably used to produce the triangular par-fry 10 of this invention is outlined in the block diagram of Fig. 1. The first step in the process is to prepare the raw potatoes. Raw potatoes may be brought to the processor directly from the field or from controlled environment storages. Potatoes which have been held in controlled environment storage for an extended period are preferably preconditioned by warming them to 60-70°F (16-21°C) for several days to reduce the sugar level to an acceptable amount. The fresh or preconditioned potatoes are then washed and peeled using any of the mechanical, chemical or steam peeling procedures common in the industry. The peeled and washed potatoes are inspected and sized, after which they are prepared for cutting.

If the potatoes are to be cut into strips using a hydraulic knife, they are preferably subjected to an intermediate warming step prior to cutting. It has been found that placing the potatoes in a hot water bath until they obtain an internal temperature between 80-100°F (27-38°C), preferably 100°F (38°C), will facilitate cutting the potatoes with a hydraulic knife.

The next step in the preferred process is to cut the potatoes into strips having triangular cross-sections. This can be accomplished by any means desired, although it is preferably done using a hydraulic knife.

After the raw potatoes have been cut into triangularly shaped strips, there will normally be a buildup of starch on the exposed surfaces. After cutting, the strips are rinsed in a conventional manner to remove this starch.

The rinsed strips are then water and/or steam blanched using conventional methods to partially cook the potato strips. The strips may be subjected to single or multiple stage blanching in which water temperatures may range from 120-190°F (49-88°C). Steam blanching may be accomplished at atmospheric conditions, nominally 212°F (100°C). Water blanching dwell times may vary from 5-30 minutes (preferably 12-20 minutes), while steam blanching may vary from 2-10 minutes. Normally, blanch times for these strips are less than for square par-fries. Furthermore, the heating is more uniform as there is less of a temperature drop across the surface to the center c than for square fries. This provides better blanching results than for square par-fries. The blanching sequences should accomplish the following results: gelatinization of the starch cells in the strips to a desired level for a texturizing effect; control of the final color of the strips by leaching out excess sugar and other chemical agents within the strip which cause darkening or discoloration; inactivation of the peroxidase enzyme systems which cause enzymatic discoloration; and partially cooking the strips.

After blanching, the strips may be conveyed through or into special processing solutions, if so desired. Exposure may vary from as little as 10 seconds to several minutes. Normally, an exposure of 15-60 seconds is preferred. These solutions commonly contain a sequestering or chelating agent, such as sodium acid pyrophosphate, to preserve the natural color of the strip, as well as dextrose or sucrose or an invert sugar and/or other additives that may be selected for processing control of the par-fries. The solution may be heated to a range of 120°-180°F.

After the solution treatment, the strips are conveyed through a heated, forced-air dryer to remove moisture from the strips. The dryer may be a single or multiple stage unit, with air temperatures ranging from 150-240°F (66-138°C). Both drying time and temperature may be varied to obtain the desired finished product. Because of their relatively large surface area, smaller cross-sectional area, and closeness of the center to the surface moisture can be removed from the triangularly shaped strips more efficiently and faster than with strips of conventional shape. The drying process is designed to remove from 10-30% of the moisture within the blanched triangular strips.

The strips are then conveyed to a deep-fat fryer and fried in an edible shortening that may be either pure vegetable, pure animal, or a combination of the two shortenings. The frying parameters will be varied according to the cross-sectional dimensions and desired solid content of the finished product. Under normal conditions, however, the frying temperature ranges from 350-390°F (177-199°C) in most applications. The frying process removes an additional 10-30% of the moisture in the strips and imparts a percentage of the frying media into the par-fries. Because of their improved heat and moisture transfer characteristics, the triangularly shaped strips will absorb more oil or shortening during the frying step than conventionally shaped strips. This additional oil imparts added flavor into the final french fry. Furthermore, the non-oil moisture content is reduced from that of rectangular par-fries under the same frying conditions.

After the strips are partially fried in shortening, they are quick-frozen by conventional processes. They are then sent to retailers where they can be prepared for consumption by finish-frying them in oil or shortening for a short time. For 1/2-inch, triangularly shaped par-fries, for example, a final fry time in the range of 1-3 minutes is generally required.

Test Results - Comparative Solids and Oil Percentages

A comparison was made of the percentage of solids and oil-absorption characteristics of a 1/2-inch (side dimension raw cut), triangularly shaped par-fry and a 5/16-inch (side dimension finish size), square-shaped par-fry. For each characteristic of the two shapes, a comparison was made as to the percent oil and percent solids of the whole strips, their corners, their edges, and middle portions. Cuts having a radius of 1/8 inch or less were made in each corner of the two par fry styles and taken as the corners. The remaining portion of the two par-fry styles was taken as the middle without corners. Cuts were also made to remove 1/16-inch or less of the edges of both par fry styles and taken as the edges. The remaining portion was taken as the middles without the edges.

The average percent total solids for each of the samples was as follows:

| | |
|---|---|
| Triangular Corners | 48.9% |
| Triangular Edges | 47.9% |
| Triangular Middles without Corners | 31.0% |
| Triangular Middles without Edges | 27.5% |
| | |
| Square Corners | 43.0% |
| Square Edges | 41.4% |
| Square Middles without Corners | 25.6% |
| Square Middles without Edges | 24.0% |
| | |
| Whole Triangular Par Fries | 37.2% |
| Whole Square Par Fries | 30.8% |

The average oil absorbed in the potatoes for each of the samples was as follows:

| | |
|---|---|
| Triangular Corners | 15.5% |
| Triangular Edges | 13.4% |
| Triangular Middles without Corners | 3.4% |
| Triangular Middles without Edges | 1.9% |
| | |
| Square Corners | 12.5% |
| Square Edges | 10.8% |
| Square Middles without Corners | 2.0% |
| Square Middles without Edges | 0.7% |
| | |
| Whole Triangular Par Fries | 7.6% |
| Whole Square Par Fries | 4.5% |

As can be seen from the above results, the triangularly shaped par-fries have both a higher percentage of oil and total solids in the corner, edge, and middle portions, and also the strips when taken as a whole. A higher solids percentage will result in improved textural characteristics after final frying being evidenced by an overall crispier french fry. Additionally, the triangular shaped par-fries absorb more oil and consequently have improved flavor.

The desirable higher solids content of a triangular par-fry can also be seen in lower quality (lower solids content) varieties of potatoes. This improvement in percentage of solids thus enables a processor to use lower quality potatoes with respect to raw solids to meet the needs of retailers who require high solids percentages in the final product.

Improved processing efficiency also results from the triangular shape. The results of tests show that even for a larger triangular shaped strip, as compared to a smaller square shaped strip, the processing times can be about the same. Thus the triangular shape advantageously allows the same ease and time of processing as for smaller strips of conventional shape. This increase in efficiency and increase in percentage of solids can also be expected in comparison to larger cut sizes of conventional shape, based on past processing data. For example, it is expected that if a 1/2-inch raw cut, triangular shaped strip produces 36% solids, then finished conventional shapes of 1/4 inch, 5/16 inch, 3/8 inch and 1/2 inch would produce, respectively, 32-34%, 30-32%, 28-30%, and 27-29% solids using the same raw potatoes and similar processing procedures.

Another advantage of the triangular par-fry is that the corners become crisper during the par-frying processing. This crispness extends the full length of the par-fry and is indicated in the drawing by the numeral 12. The crispness provides for greater structural strength during handling before the final frying, and after final frying provides a good bite shear quality to the fry. That is, the bite always passes through at least one crisp corner. Consumers find this initial crispness followed by the mealy texture of the center to be a highly desirable characteristic in a final fry.

The structural strength provided by the crisp corners also enhances the holding quality of the product, giving the product an extended period of several minutes after finished frying in which it remains rigid and desirable to eat.

The increased oil absorption and crispness results in a more golden coloring at the crisp corners than in conventional rectangular par-fries. This enhances the value of the final fry, as consumers find the golden coloring desirable.

In summary, the triangular-shaped par-fry cut from natural raw potatoes has resulted in numerous advantages over conventional rectangular or square par-fries. The triangular cut par-fry has consistent and better bite crispness while maintaining a mealy center and .thus a better "bite shear." It has a more golden coloring along its crisp edges. The solids content is higher for both high raw solids content potatoes as well as lower raw solids potatoes. This advantageously allows lower quality, more plentiful raw potatoes to be cut for par-fries while still achieving the consumer desired high percentage of solids in the final fried strips. More flavorful final fries are obtained as a result of higher quantity of oil being absorbed by the triangular strip for the same volume as in a rectangular strip. The strips blanch more easily by allowing more rapid heat penetration. Their intercellular moisture is released more readily during blanching and frying. The triangular par-fries dry and freeze more quickly. The triangular par-fries allow more efficient hot and cold air circulation for both drying and freezing. Finally, the triangular shape is novel in appearance for cut raw potato par-fry strips, providing a sales appeal from the shape alone.

Although the par-fries of this invention have been described with respect to a particular process, it will be obvious to those of ordinary skill in the art that the triangular shaped strips of this invention would be advantageous for use in other par-fry processes as well. As all par-fry processes involve transfer of heat and moisture, the triangularly shaped strips with their enhanced transfer characteristics will be advantageous in these processes as well. It is not intended, therefore, that this invention be limited to par-fries produced from the specific process described herein but rather that it include all equivalent processes within the spirit of the invention.

## Claims

1. A process for preparing frozen, partially fried potato strips from whole, raw potatoes, which comprises the steps of:

cutting the whole, raw potatoes into elongated strips having a triangular cross-section for improved moisture and heat transfer during processing;

blanching the strips to partially cook them;

drying the strips to remove moisture;

frying the strips in fat or oil until the corners of the strips are crisp, but the center remains cooked but mealy in texture; and

freezing the fried strips.

2. The process of claim 1, further comprising warming the whole, raw potatoes to a temperature in the range of 80-130°F prior to cutting, and rinsing the strips to remove surface starch therefrom.

3. A frozen, partially fried potato strip prepared by the process of claim 1 or claim 2.

4. A partially fried, frozen potato strip cut from a raw potato and having a triangular cross-section for improved heat transfer characteristics during processing and final frying, thus resulting in a final fry having a high percentage of solids, crispy exterior corners, and a mealy interior portion.

5. The strip of claim 4, said corners having a golden color.

6. The strip of claim 4, having a more enhanced flavor from a higher oil absorption into the strip.

7. The strip of claim 4, having a crisp rigid exterior and mealy interior which has a shelf life of several minutes after finish frying.

FIG. 1

FIG. 2

FIG. 3

FIG. 4

0105482

European Patent
Office

**EUROPEAN SEARCH REPORT**

Application number

EP 83 10 9770

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-2 046 070 (CARNATION CO.) * Claim 1 * | 1 | A 23 L 1/216 |
| Y | US-A-4 256 777 (W.D. WEAVER et al.) * Claim 1 * | 1 | |
| D,A | US-A-3 397 993 (W.K. STRONG) * Claim 1 * | 1 | |
| A | DE-A-2 359 672 (McCAIN FOODS LTD.) * Claim 1 * | | |

TECHNICAL FIELDS
SEARCHED (Int. Cl. ³)

A 23 L 1/00

The present search report has been drawn up for all claims

| Place of search | Date of completion of the search | Examiner |
|---|---|---|
| BERLIN | 12-12-1983 | SCHULTZE D |